Europäisches Patentamt

European Patent Office

Office européen des brevets

(11) Veröffentlichungsnummer: **0 298 265**
**A2**

(12) # EUROPÄISCHE PATENTANMELDUNG

(21) Anmeldenummer: 88109153.2

(22) Anmeldetag: 08.06.88

(51) Int. Cl.4: **B60D 1/02**

(30) Priorität: 09.07.87 DE 3722735

(43) Veröffentlichungstag der Anmeldung:
**11.01.89 Patentblatt 89/02**

(84) Benannte Vertragsstaaten:
**AT BE CH DE ES FR GB GR IT LI LU NL SE**

(71) Anmelder: ROCKINGER Spezialfabrik für
Anhängerkupplungen GmbH & Co.
Waldmeisterstrasse 80 Postfach 45 04 64
D-8000 München 45(DE)

(72) Erfinder: Glässner, Ralf, Dipl-Ing.
Schweidnitzer Strasse 41
D-8000 München 50(DE)
Erfinder: Schneider, Lothar
Am Stutenanger 8
D-8042 Oberschleissheim(DE)

(74) Vertreter: Weickmann, Heinrich, Dipl.-Ing. et
al
Patentanwälte H. Weickmann, Dr. K. Fincke
F.A. Weickmann, B. Huber Dr. H. Liska, Dr. J.
Prechtel Möhlstrasse 22 Postfach 860 820
D-8000 München 86(DE)

(54) Anhängerkupplung, insbesondere Schwerlastanhängerkupplung.

(57) Bei einer Schwerlastanhängerkupplung greift am
Kupplungskörper eine Gewichtskompensationsfederung an, welche ein Moment um die Querachse
erzeugt und dem Eigengewichtsmoment des Kupplungskörpers um die Querachse , wenigstens in
einem an die horizontale Lage des Kupplungskörpers angrenzenden Arbeitsschwenkwinkelbereich um
die Querachse , annähernd das Gleichgewicht hält.

EP 0 298 265 A2

Fig.1

## Anhängerkupplung, insbesondere Schwerlastanhängerkupplung

Die Erfindung betrifft eine Anhängerkupplung, insbesondere Schwerlastanhängerkupplung, umfassend einen Kupplungskörper mit einem die Zugöse eines nachlaufenden Fahrzeugs (Anhänger) spielarm durchsetzenden, im wesentlichen zylindrischen Kupplungsbolzen, wobei der Kupplungskörper an einem, gegebenenfalls um eine horizontale Längsachse drehbaren, Zugelement um eine im wesentlichen horizontale Querachse schwenkbar gelagert ist, wobei weiter durch ein vorgegebenes Rastlösemoment auf den Kupplungskörper um die Querachse überwindbare Verrastungsmittel vorgesehen sind, welche den Kupplungskörper in horizontaler Lage (Auslenkung Null um die Querachse) zu verrasten gestatten, und wobei weiter die Schwenkbewegung des Kupplungskörpers um die Querachse durch Reibungsmittel dämpfbar ist.

Bei herkömmlichen Anhängerkupplungen wird die Vertikalbeweglichkeit der Zugöse im Kupplungsmaul dadurch erreicht, daß der Kupplungsbolzen eine ballige Form besitzt, während die Zugösenbuchse innen zylindrisch ist. Bei Schwerlast-Anhängerkupplungen wird dieses Prinzip aus folgenden Gründen nicht angewandt: Durch die ballige Form des Kupplungsbolzens wird dieser genau an den gefährdeten Querschnitten, d.h. kurz vor Eintritt in die obere bzw. untere Buchse, geschwächt. Wollte man eine Anhängerkupplung nach diesem Prizip für Schwerlastverkehr bauen, so würde hierdurch ein erheblich größerer Kupplungsbolzen und damit auch Zugösendurchmesser als üblich erforderlich sein. Dies würde sich negativ auf die im Schwerlastverkehr sowieso schon schwierige Kuppelbarkeit auswirken.

Beim oben geschilderten Prinzip berühren sich Kupplungsbolzen und Zugöse jeweils nur auf einer schmalen Ringfläche, sodaß hier bei Schwerlastverkehr die Flächenpressung zu groß würde.

Im Schwerlastverkehr ist darüberhinaus die Verwendung von Tiefladern üblich, bei denen im gekuppelten Zustand auf ebener Straße die Zugöse bereits in einem bestimmten Winkel zur Horizontalen steht. Bei Verwendung einer herkömmlichen Anhängerkupplung mit balligem Bolzen würde dies bedeuten, daß die verbleibenden vertikalen Schwenkwinkel nach einer Seite hin erheblich eingeschränkt sind.

Aus diesen Gründen ist es bisher schon üblich, für Schwerlast-Kupplungen Ausführungen mit einem zylindrischen Bolzen zu wählen. Hierbei allerdings kann die Vertikalbewegung der Zugöse an der Kupplung nicht durch Spiel zwischen Kupplungsbolzen und Zugöse erzeugt werden, sondern es muß ein besonderes Quergelenk vorgesehen werden.

Dieses Quergelenk bedingt bisher allerdings einige Probleme.

Eine bisher schon übliche und auch gut bewährte Ausführungsform einer solchen Kupplung ist durch den Rockinger Prospekt "Vollautomatische Anhängerkupplung Typ 56E - Druckschrift 428.1" bekannt. Bei dieser Kupplung ergeben sich gewisse Probleme, die zur Erschwernis der Bedienbarkeit und zu spezifischen Verschleißproblemen führen.

So z.B. drückt das Gewicht des Kupplungskörpers diesen nach unten. In die gleiche Richtung wirkt das Gewicht der Deichsel, sofern diese nicht durch Federkraft im Gleichgewicht gehalten wird. Zu diesen Gewichtskräften kommen noch die entsprechenden Massenkräfte beim Befahren von unebenen Strecken. Die Drehbewegung des Kupplungskörpers nach unten wird dadurch begrenzt, daß sich die Zugöse am Bolzen verkantet. Kräfte durch Auflaufen bzw. Anziehen des Anhängers werden nun im ersten Moment nicht mehr von der gesamten zylindrischen Fläche des Kupplungsbolzens aufgenommen, sondern nur durch die im verkanteten Zustand beaufschlagten Bereiche. Dies führt zu größerem Verschleiß. Es ist auch nicht möglich, diesen Effekt gegenzusteuern durch eine engere Toleranz des Spiels zwischen Kupplungsbolzen und Zugöse, da das bisher übliche Spiel zum Einkuppeln erforderlich ist.

Ein weiterer nachteiliger Effekt ergibt sich dadurch, daß -wenn der Kupplungskörper z.B. durch Vibrationen und sein Eigengewicht - in die unterste Lage gewandert ist, beim Auflaufen des Anhängers die entstehende Deichselkraft nicht mehr gerade in die Kupplung übertragen wird, sondern daß vielmehr Zugöse und Kupplungskörper ein bereits um wenige Grade ausgelenktes Kniegelenk bilden, sodaß die Deichselkraft die Zugöse auf Abbiegen beansprucht. Bei der bekannten Anhängerkupplung wurden diese Probleme wie folgt angegangen:

In der Anhängerkupplung befindet sich ein Blattfederpaket, das auf eine Anflächung eines Lagerauges des Zugelement wirkt, sodaß der Kupplungskörper dadurch in Normalstellung gehalten wird. Ist der Kupplungskörper soweit verschwenkt, daß die Blattfedern nicht mehr auf die Anflächung, sondern auf einen Radius des Lagerauges wirken, so ergibt sich hierdurch immer noch ein Reibmoment. Hierdurch sollen entstehende Schwingungen gedämpft werden. Gleichzeitig wird durch das Blattfederpaket und die Anflächung eine definierte Mittelstellung festgelegt, die zum Einkuppeln dient. Hierbei ist nämlich wichtig, daß die eingleitende Zugöse durch das Kupplungsmaul geführt wird und daß nicht etwa der Kupplungskörper beim Einkupplungsvorgang der Zugöse ausweicht.

Die bekannte Konstruktion erfüllt den vorgesehenen Zweck nur dann in vollständiger Weise, wenn die Zugöse auch wirklich genau horizontal im Kupplungsmaul steht. In diesem Fall ist die Mittellage eindeutig fixiert; jede Abweichung aus der Mittellage führt zu einem Rückstellmoment durch das Blattfederpaket. Beim Einkuppeln steht die Kupplung genau in der richtigen Position um das Einleiten der Zugöse und das Verriegeln der Kupplung ohne Verklemmung zu ermöglichen.

Andere Verhältnisse ergeben sich jedoch dann, wenn die Zugöse - wie es z.B. bei Tiefladern der Fall ist - schon bei Fahrt auf ebener Straße einen bestimmten Winkel zur Horizontalen bildet. Hier sind nun zwei Fälle denkbar:

1. Die Anflächung befindet sich noch im Bereich der Blattfedern. Dann wirkt auf den Kupplungskörper auch schon bei normaler Fahrt ein Rückstellmoment, welches das oben angesprechende Kniegelenk aus der Mittellage hinausdrückt, wodurch wie beschrieben horizontale Deichselkräfte die Zugöse auf Abbiegen beanspruchen.

2. Die Anflächung befindet sich bereits außerhalb des Wirkungsbereichs der Blattfeder. In diesem Fall wirken nur noch die durch die Blattfeder verursachten Reibkräfte. Diese werden jedoch durch die im Fahrbetrieb auftretenden Schwingungen überspielt, so daß letztendlich das Gewicht des Kupplungskörpers und gegebenenfalls das Gewicht der Deichsel wiederum zu der oben beschriebenen Belastung der Zugöse auf Abbiegen führen.

Bei einer weiteren bekannten Ausführungsform der Firma Rockinger, gemäß Prospekt Typ 42, Druckschrift JF 868 V Bl.988, wird die Arretierung in Normallage dadurch bewirkt, daß am Gelenkbolzen verdrehfest Rastenscheiben mit Kugeln angebracht sind, die auf Lagerwangen des Kupplungskörpers wirken. Die Rastenscheiben werden durch Tellerfedern an die Lagerwangen gedrückt. In Normalstellung liegen dann die Kugeln einerseits in den Vertiefungen in der Rastenscheibe und andererseits in Vertiefungen der Lagerwangen; hieraus ergibt sich eine Arretierungswirkung. Außerhalb der Normalstellung reiben die Kugeln federbelastet an der Außenfläche der Lagerwangen, wodurch sich ein Reibmoment ergibt. Aber dieses wird auch hier durch die im Fahrbetrieb auftretenden Schwingungen überspielt, so daß letztendlich das Gewicht des Kupplungskörpers und gegebenenfalls das Gewicht der Deichsel wiederum zu der oben beschriebenen Belastung der Zugöse auf Abbiegen führen.

Der Erfindung liegt die Aufgabe zugrunde eine Anhängerkupplung der eingangs bezeichneten Art so zu gestalten, daß der Kupplungskörper in jeder Stellung seines Arbeitsschwenkbereichs wenigstens annähernd im Gleichgewicht ist. Zur Lösung dieser Aufgabe wird erfindungsgemäß vorgeschlagen, daß an dem Kupplungskörper eine Gewichtskompensationsfeder angreift, welche ein Moment um die Querachse erzeugt und dem Eigengewichtsmoment des Kupplungskörpers um die Querachse wenigstens in einem an die horizontale Lage des Kupplungskörpers angrenzenden Arbeitsschwenkwinkelbereich um die Querachse annähernd das Gleichgewicht hält.

Unter Arbeitsschwenkwinkelbereich des Kupplungskörpers wird derjenige Schwenkwinkelbereich verstanden, innerhalb dessen der Kupplungskörper bei Ankupplung der in Frage kommenden Anhänger unterschiedlicher Deichselanlenkungshöhe schwenkt, wenn der Zug über unebenes Gelände fährt. Üblicherweise rechnet man mit einem maximalen Schwenkwinkel gegenüber der Horizontalen nach unten von bis zu 30° und gegenüber der Horizontalen nach oben von bis zu 20°. Es sei nun zunächst angenommen, daß das Gewicht der Zugdeichsel des Anhängers, wie in vielen Fällen der Fall, annähernd austariert ist und kein wesentliches Gewichtsmoment auf den Kupplungskörper ausübt. In diesem Fall ist bei der erfindungsgemäßen Ausbildung sichergestellt, daß auch der Kupplungskörper dank der Gewichtskompensationsfeder kein wesentliches Gewichtsmoment um die Querachse erzeugt. Dies bedeutet dann, daß im Falle einer Zugkraft auf die Deichsel, wie sie in der Regel durch den Fahrwiderstand des Anhängers erzeugt wird, die Querachse und die durch die Kupplungsbolzen und die Zugöse gebildete virtuelle Querachse in Zugkraftrichtung liegen. Tritt nun ein Schub vom Anhänger über die Deichsel auf das Zugfahrzeug ein, so bleibt diese Fluchtstellung der beiden Querachsen in Richtung der Kraftübertragung erhalten. Es kann keine Kniehebelwirkung eintreten und es wird keine Rückkraft auf die Zugöse übertragen. Selbst wenn eine genaue Flucht der beiden Quergelenke in Kraftübertragungsrichtung sich nicht einstellt, so bleibt die Abweichung jedenfalls so gering, daß das durch die Reibmittel bedingte Reibmoment ausreicht, um eine Vergrößerung der Fluchtabweichung und damit eine zunehmende Kniehebelwirkung zu verhindern. Die vorhandene Verrastung in der Horizontalstellung des Kupplungskörpers sorgt dafür, daß beim Einkuppeln die Zugöse den Kupplungskörper in der ordnungsgemäßen Einkupplungsstellung vorfindet.

Bei den Anhängerkupplungen der hier betrachteten Bau- und Einsatzart besteht auch häufig die Forderung, daß der Kupplungskörper um die Querachse um ca. 90° nach unten abklappbar sein soll, etwa dann, wenn das Zugfahrzeug mit Sonderaufbauten z.B. Heckkippern versehen ist, die den normalerweise von dem Kupplungskörper eingenommenen Raum in bestimmten Betriebszustän-

den beanspruchen.

Es ist deshalb auch bei der erfindungsgemäßen Anhängerkupplung die Möglichkeit vorgesehen, daß der Kupplungskörper um annähernd 90° um die Querachse nach unten abklappbar ist. Hier kann nun die Gewichtskompensationsfeder dafür sorgen, daß auf dem gesamten Abklappweg bis 90° ein dem Eigengewichtsmoment des Kupplungskörpers entgegenwirkendes Rückstellmoment erzeugt wird, eine Möglichkeit, die es beim Stand der Technik nicht gegeben hat. Dies ist ein erheblicher ergonomischer Vorteil für den Bediener, da dieser mit weit geringerem Kraftaufwand als bisher den abklappbaren Kupplungskörper im Bedarfsfall wieder in die horizontale Stellung bringen kann.

Aufgrund üblicher Federcharakteristiken ist zwar damit zu rechnen, daß mit zunehmender Annäherung des Kupplungskörpers an die 90° Abklappstellung das Rückstellmoment der Eigengewichtskompensationsfeder größer wird als das mit zunehmender Abklappung kleiner werdende Eigengewichtsmoment des Kupplungskörpers. Dies erweist sich aber ergonomisch als vorteilhaft, weil es für den Bediener leicht ist, den Kupplungskörper, unter Einsatz seines Körpergewichts, in die 90° Abklappstellung zu drücken, während es für ihn sehr viel schwerer ist, den Kupplungskörper aus der Abklappstellung, unter Überwindung der Verrastungsmittel und der Reibungsmittel, hochzuklappen. Auch in der 90° Abklappstellung kann eine Verrastung wirksam sein, sodaß selbst dann, wenn in dieser Stellung das Rückstellmoment der Eigengewichtskompensationsfeder das Eigengewichtsmoment übersteigt, ein sicheres Verbleiben des Kupplungskörpers gewährleistet ist.

Im Hinblick auf den erheblichen Winkelweg innerhalb dessen die Eigengewichtskompensationsfederung wirksam sein soll, beispielsweise über einen Winkelweg von 110°, empfiehlt es sich, eine Eigengewichtskompensationsfeder zu verwenden, welche in einem Diagramm über den Schwenkwinkel betrachtet eine möglichst geringe Veränderung des Rückstellmoments bewirkt. Diese Forderung kann von einer Spiralfeder, insbesondere einer Spiralfeder mit Vorspannung erfüllt werden. Dann läßt sich in dem Arbeitsschwenkwinkelbereich, wie oben definiert, die Kompensation des in diesem Arbeitswinkelbereich nur geringfügig veränderlichen Eigengewichtsmoments nahezu vollständig erreichen, während im Annäherungsbereich an die 90° Abklappstellung - wie oben dargelegt -eine Überkompensation des Eigengewichts jedenfalls dann nicht schädlich ist, wenn eine Verrastung in der 90° Abklappstellung vorgesehen ist.

Die Vorspannung wird vorzugsweise einstellbar gewählt im Hinblick darauf, daß Spiralfedern von Stück zu Stück häufig schwankende Federcharakteristiken haben können und darauf, daß sich die Federcharakteristik im Laufe des Betriebs verändern kann. Damit wird auch schwankenden Gewichten des Kupplungskörpers Rechnung getragen.

Eine günstige konstruktive Anordnung für die Eigengewichtskompensationsfeder besteht darin, daß die Spiralfeder mit ihrem inneren Ende an einer Querwelle angreift, welche in einem Auge des Zugelements unverdrehbar gelagert ist, und mit ihrem äußeren Ende an einer die Spiralfeder umschließende Abstützkappe wobei diese Abstützkappe an einer dem Auge anliegenden Lagerwange des Kupplungskörpers, gegebenenfalls in verschiedenen Winkelstellungen, feststellbar und sicherbar ist.

Um die Vorspannung gegebenenfalls leicht verändern zu können ist vorgesehen, daß die Lagerkappe auf einem Ende der Querwelle drehbar und axial verschiebbar gelagert ist, daß die Lagerkappe durch Axialverschiebung gegenüber der Querwelle aus ihrer jeweiligen Feststellung gegenüber der Lagerwange lösbar ist, und zwar so, daß nach Lösung der jeweiligen Feststellung die Abdeckkappe noch auf dem Ende der Querwelle drehbar gelagert ist, und daß an der Lagerkappe Angriffsflächen zum Aufbringen eines Federvorspannmoments angebracht sind.

Konstruktiv läßt sich dieses auf einfache Einstellung der Federspannung abzielende Bauprinzip in der Weise einfach verwirklichen, daß die Lagerkappe an ihrer Endwand eine Ausbuchtung besitzt, deren Innenumfangsfläche die Lagerung der Kappe auf der Querwelle übernimmt und deren Außenumfangsfläche die Angriffsflächen aufweist.

Die Verrastungsmittel können, wie auch schon bei dem an zweiter Stelle genannten Stand der Technik verwirklicht, als Kugelverrastungsmittel ausgebildet sein. Dabei kann ein und dasselbe Verrastungsmittel sowohl die Verrastung in der Horizontalen als auch die Verrastung in der abgeklappten Stellung übernehmen. Um die notwendigen Rastlösemomente aufzubringen, die eine sichere Verrastung sowohl in der Horizontalstellung als auch in der 90° Abklappstellung gewährleisten, wird man in der Regel mehrere Rastkugeln verwenden. Dies bedeutet, daß unter Umständen zwischen der Horizontalstellung und der 90° Abklappstellung je nach der Winkelverteilung und Zahl der Verrastungskugeln, weitere Verrastungsstellungen auftreten können. Diese Zwischenverrastungen haben keine besondere Funktion, sind aber auch ergonomisch nicht schädlich, weil man die Bewegung von der Horizontalstellung zur 90° Abklappstellung in der Regel mit Schwung durchführt, welcher die Zwischenverrastungsstellungen leicht überfahren läßt. Es könnte in Betracht gezogen werden auch innerhalb des Arbeitsbereichs eine Mehrzahl von Zwischenverrastungsstellungen zuzulassen. Dann könnte man den Einkupplungsvorgang auch bei Schrägstellung der Zugdeichsel, etwa im Falle eines Tieladers, in der jeweils optimalen, rastgesicherten Einstellung des Kupplungskörpers durchführen. Eine solche Ausführungsform würde sich auf auf das Verhalten im Fahrbetrieb nicht negativ auswirken: es würden dann zwar durch die Zwischenverrastungsstellungen bedingt, gewisse Fluchtabweichungen der beiden Querachsen von der Kraftübertragungsrichtung auftreten; diese wären aber wegen der vorhandenen Zwischenverrastungen unschädlich, weil sie auch bei auflaufendem Anhänger eine Verkleinerung des Kniehebelwinkels verhindern würden.

Die Kugelverrastungsmittel können von zwei gegeneinander um die Querachse verdrehbaren Verrastungsscheiben gebildet sein, deren erste unverdrehbar mit der Querwelle verbunden ist und deren zweite unverdrehbar mit einer Lagerwange des Kupplungskörpers verbunden ist, wobei eine der Verrastungsscheiben mindestens eine Verrastungskugel zum Eingriff in Verrastungsausnehmungen der jeweils anderen aufnimmt.

Um das Rastlösemoment leicht einstellen zu können, kann man vorsehen, daß die mit der Lagerwange verbundene Verrastungsscheibe an der Lagerwange anliegt, daß die mit der Querwelle verbundene Verrastungsscheibe unverdrehbar aber axial verschiebbar auf der Querwelle geführt ist, daß auf einem Gewindeabschnitt der Querwelle eine Einstellmutter verstellbar angeordnet ist und daß zwischen der Einstellmutter und der axial verschiebbaren Verrastungsscheibe eine axiale Kompressionsfeder, insbesondere in Form eines Tellerfederpakets, angeordnet ist.

Was die Reibungsmittel anbelangt, so können diese grundsätzlich gesondert von den Rastmitteln vorgesehen sein. Es ist aber im Hinblick auf den Konstruktionsaufwand vorteilhaft, wenn die Reibungsmittel wenigstens zum Teil von den Verrastungsmitteln gebildet sind, wenn sich diese jeweils außerhalb einer bestimmten Verrastungsstellung befinden.

Dann kann man mit dem Rastlösemoment gleichzeitig eine Einstellung des Reibmoments bewirken. Um gleichwohl in der relativen Wahl der Größe des Rastlösemoments einerseits und des Reibmoments andererseits frei zu sein, kann man die Geometrie der Verrastungsmittel verändern, also beispielsweise die Tiefe der die Rastkugeln aufnehmenden Löcher in der einen Verrastungsscheibe.

Um die Verrastungsmittel vor Korrosion und Veränderung des Rastlösemoments zu schützen empfiehlt es sich, daß die Verrastungsmittel durch eine Abdeckkappe abgedeckt sind.

Nach einer bevorzugten Ausführungsform der Erfindung ist vorgesehen, daß bei Lagerung des Kupplungskörpers auf einer ein Lagerauge des Zugelements unverdrehbar durchsetzenden Querwelle vermittels zweier beidseits des Lagerauges liegender Lagerwangen die Eigengewichtskompensationsfeder an der vom Lagerauge fernen Seite der einen Lagerwange und die Verrastungsmittel auf der vom Lagerauge ferngelegenen Seite der anderen Lagerwange angeordnet sind.

Diese Ausführungsform sorgt dafür, daß sowohl die Verrastungsmittel als auch die Eigengewichtskompensationsfeder jeweils für sich für Wartungs- Einstell- und Austauschzwecke leicht zugänglich sind. Weiterhin wird dadurch eine ausgewogene und raumsparende Bauform gewonnen.

Durch die Abstützkappe einerseits und die Abdeckkappe andererseits werden die Lager der Querwelle in den Lagerwangen des Kupplungskörpers vor Korrosion geschützt.

Zusätzliche Reibungsmittel können in der Weise bereitgestellt werden, daß die Querwelle in dem Lagerauge des Zugelements axial lose gelagert ist, daß an der Querwelle auf der Seite der Eigengewichtskompensationsfeder ein Abstützflansch angeordnet ist, welcher gegen die zugehörige Lagerwange des Kupplungskörpers oder eine an dem Kupplungskörper anliegenden Zwischenscheibe anliegt, und daß dieser Abstützflansch durch eine Verrastungsfeder reibend gegen die zugehörige Wange bzw. die Zwischenscheibe angedrückt ist.

Die beiliegenden Figuren erläutern die Erfindung anhand eines Ausführungsbeispiels.

Es stellen dar:

Fig. 1 einen vertikalen Längsschnitt durch eine erfindungsgemäße Anhängerkupplung;

Fig. 2 einen horizontalen Längsschnitt auf der Höhe der Querachse durch die Anhängerkupplung der Fig. 1 und

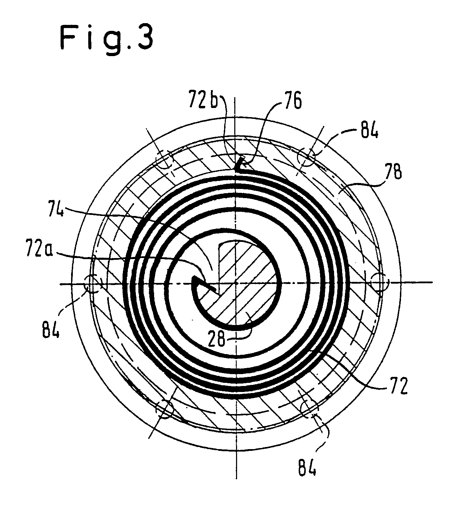

Fig. 3 einen Schnitt nach Linie III-III der Fig. 2.

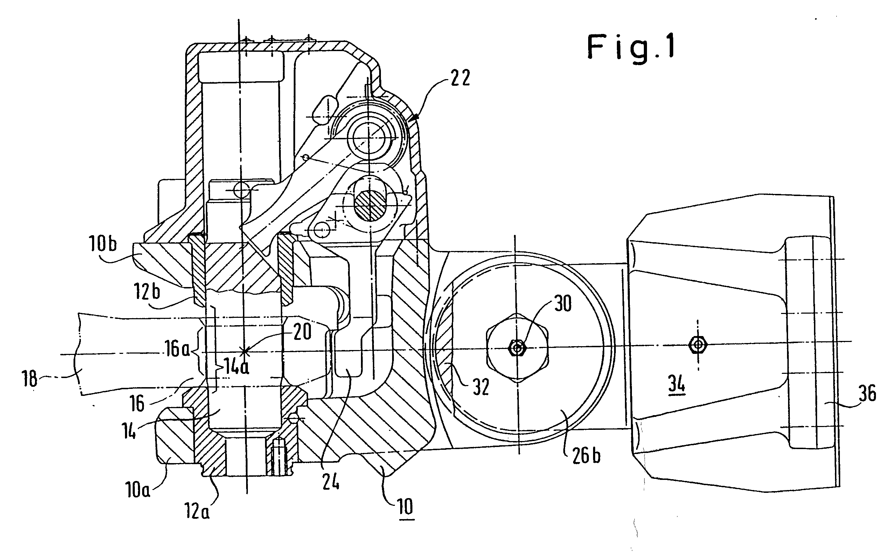

In Fig. 1 ist ein Kupplungskörper mit 10 bezeichnet. In den oberen und unteren Gabelschenkeln 10a und 10b ist je eine Buchse 12a bzw. 12b aufgenommen. In diesen Buchsen 12a und 12b ist ein Kupplungsbolzen 14 in vertikaler Richtung verschiebbar geführt. Der Kupplungsbolzen 14 durchsetzt eine Zugöse 16 einer Anhängerdeichsel 18. In der Fig. 1 ist die eingekuppelte Stellung dargestellt. Der Kupplungsbolzen 14 durchgreift dabei mit einem im wesentlichen zylindrischen Abschnitt 14a eine im wesentlichen zylindrische Bohrung 16a der Zugöse 16. Das Spiel der zylindrischen Bohrung 16a gegenüber dem zylindrischen Abschnitt 14a ist gering, so daß auch die Schwenkbeweglichkeit der Zugöse 16 gegenüber einer virtuellen Querachse 20 gering ist. Zum Auskuppeln wird der Kupplungsbolzen 14 durch eine Betätigungsmechanik 22 angehoben. Beim Einkuppeln wird die Zugöse 16 durch ein nicht dargestelltes Kupplungsmaul zwischen die beiden Gabelschenkel 10a und 10b eingeführt, oder je nach den gegebenen Standverhältnissen wird der Kupplungskörper gegen den Anhänger zurückgestoßen, so daß die beiden Gabelschenkel 10a und 10b die Zugöse 16 zwischen sich aufnehmen. Sobald die Zugöse 16 gegen einen Auslösehebel 24 anfährt, wird der Kupplungsbolzen aus seiner entkuppelten Stellung frei gegeben und fährt durch die Zugöse 16 hindurch. Die virtuelle Schwenkachse 20 befindet sich in der gezeichneten Horizontalstellung des Kupplungskörpers 10 auf gleicher Höhe wie die Querachse 30.

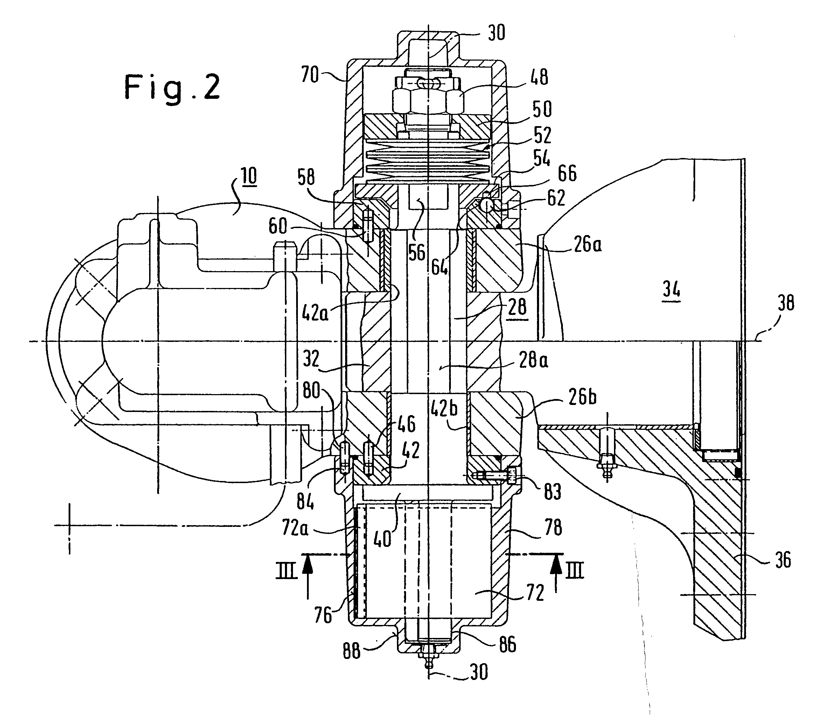

Der Kupplungskörper 10 ist mit zwei Lagerwangen 26a und 26b (siehe Fig. 2) auf einer Querwelle 28 um eine Querachse 30 drehbar gelagert. Die Querwelle 28 ist von einem Auge 32 unverdrehbar, jedoch axial verschiebbar, aufgenommen. Das Auge 32 ist Teil eines Zugelements 34, das mittels eines Befestigungsflansches 36 am Zugfahrzeug befestigt ist. Dabei ist das Zugelement 34 um eine Längsachse 38, die sich in Zugfahrzeuglängsrichtung erstreckt, drehbar.

An der Querwelle 28 ist ein Abstützflansch 40 angebracht, welcher an einer Zwischenscheibe 42 anliegt. Die Zwischenscheibe 42 ist an der Lagerwange 26b befestigt. Die Unverdrehbarkeit der Zwischenscheibe 42 an der Lagerwange 26b wird dabei durch Stifte 46 bewirkt, während die Befestigungsschrauben, die zur Befestigung der Zwischenscheibe 42 an der Lagerwange 26b dienen, nicht eingezeichnet sind. Die beiden Lagerwangen 26a und 26b sind mittels Lagerbuchsen 42a und 42b auf der Querwelle 28 drehbar gelagert, während die Querwelle 28 durch eine Abflachung 28a unverdrehbar in dem Auge 32 gelagert ist.

Auf der Querwelle 28 ist an derem oberen Ende eine Einstellmutter 48 aufgeschraubt. Diese Einstellmutter liegt an einer Druckscheibe 50 an, welche ihrerseits auf ein Tellerfederpaket 52 einwirkt. Das Tellerfederpaket 52 liegt an einer Verrastungsscheibe 54 an, die auf der Querwelle 28 durch eine Abflachung 56 unverdrehbar, aber axial verschiebbar angebracht ist. Die Verrastungsscheibe 54 arbeitet mit einer weiteren Verrastungsscheibe 58 zusammen, die an der Lagerwange 26a durch Stifte 60 unverdrehbar angebracht ist. Zwischen den beiden Verrastungsscheiben 54 und 58 sind in einer Winkelteilung von 30° eine Mehrzahl von Verrastungskugeln 62 angebracht, welche in Kugelaufnahmebohrungen 64 der Verrastungsscheibe 58 aufgenommen sind und in Verrastungsausnehmungen 66 der Verrastungsscheibe 54 eingreifen. Durch das Tellerfederpaket 52 ist das Rastlösemoment bestimmt, welches notwendig ist, um die Verrastungsscheibe 58 gegenüber der Verrastungsscheibe 54 zu verdrehen und damit um den Kupplungskörper 10 gegenüber der Querwelle 28 zu verdrehen. In Fig. 1 und 2 befindet sich der Kupplungskörper in seiner Horizontalstellung, d.h. in derjenigen Stellung, in welcher der Lagerbolzen 14 vertikal steht. Durch die Verrastungsscheiben 54 und 58 und die Verrastungskugeln 62 ist der Kupplungskörper 10 in dieser Horizontalstellung verrastet. Der Kupplungskörper 10 kann gegenüber der Querwelle 28 aus der Horizontalstellung nach oben und nach unten verschwenkt werden. Der Schwenkweg nach oben und unten ist dabei so groß, daß er allen durch unterschiedliche Deichselhöhen und durch unebenes Gelände bedingt auftretenden Schwenkwinkeln Rechnung trägt. Außerdem ist der Schwenkwinkel nach unten bis auf 90° erweiterbar, um den Kupplungskörper in eine vertikal nach unten gerichtete Stellung abklappen zu können, in welcher er die Bewegung bestimmter Aufbauten des Zugfahrzeugs, z.B. eines Heckkippers, freigibt. Nach oben ist mit Schwenkwinkeln bis zu 20° gegenüber der Horizontalen zu rechnen und nach unten mit Schwenkwinkeln bis zu 30° gegenüber der Horizontalen. Nach jeweils 30° Schwenkweg wird wegen der gewählten Teilung der Verrastungskugelanordnung jeweils eine Verrastungsstellung auftreten. Dies bedeutet, daß bei Verschwenkung des Kupplungskörpers nach unten nach 30°, 60° und 90° eine Verrastung auftritt.

Die Reibung des Kupplungskörpers gegenüber Schwenkbewegungen auf der Querwelle 28 ist zum einen dadurch bestimmt, daß die Verrastungskugeln 62 außerhalb der Verrastungsausnehmungen 66, reibend an der Verrastungsscheibe 54 gleiten und daß andererseits der Abstützflansch 40, welcher drehfest mit der Querwelle 28 verbunden ist, reibend an der Zwischenscheibe 42 anliegt, welche drehfest mit der Lagerwange 26b verbunden ist. Das Reibungsmoment hängt dabei von der Anspannung des Tellerfederpakets 52 ab, welches die Verrastungsscheiben 54 und 58 gegeneinander vorspannt und welches gleichzeitig den Abstützflansch 40 gegen die Zwischenscheibe 42 vorspannt.

Die durch die Verrastungsscheiben 54 und 58, das Tellerfederpaket 52, die Druckscheibe 50 und die Einstellmutter 48 gebildeten Verrastungsmittel sind von einer Abdeckkappe 70 abgedeckt, welche an der Lagerwange 26a lösbar befestigt ist, so daß die genannten Verrastungsmittel durch Abnehmen der Abdeckkappe 70 für Reparatur-, Wartungs- und Einstellzwecke leicht freigelegt werden können.

Die Querwelle 28 setzt sich an der Unterseite des Abstützflansches 40 nach unten fort und ist an ihrem unteren Ende zur Verbindung mit einer als Spiralfeder ausgebildeten Gewichtskompensationsfederung ausgebildet. Die Spiralfeder ist mit 72 bezeichnet.Das innere Ende 72a der Spiralfeder 72 greift in eine Hakennut 74 der Querwelle 28 ein. während das äußere Ende der Spiralfeder 72 in einen Schlitz 76 einer Abstützkappe 78 eingreift. Die Abstützkappe 78 ist an dem Lagerflansch 26b durch Stifte 80 drehfest angebracht und an der Zwischenscheibe 42 durch Kopfschrauben 83 befestigt. Nach Lösen der Kopfschrauben 83 kann die Abstützkappe 78 von der Lagerwange 26b soweit abgehoben werden, daß Bohrungen 84 in der Abstützkappe 78 außer Eingriff mit den an der Lagerwange 26b verankerten Stiften 80 treten. Dann kann die Abstützkappe 78 gegenüber der Querwelle 28 verdreht werden. Es sind mehrere Bohrungen oder Bohrungsgruppen 84 in der Abstützkappe 78 vorhanden, so daß die Abstützkappe 78 in verschiedene Winkelstellungen gegenüber der Lagerwange 26b eingestellt werden kann. Durch diese verschiedenen Einstellmöglichkeiten lassen sich verschiedene Vorspannungen der Spiralfeder 72 einstellen.

Das untere Ende der Querwelle 28 greift in eine Ausbuchtung 86 der Abstützkappe 78 ein. Die Eintauchtiefe der Querwelle 28 in der Ausbuchtung 86 ist so bemessen, daß die Abstützkappe 78 noch auf der Querwelle 28 gelagert ist, wenn die Bohrungen 84 und die Stifte 80 außer Eingriff getreten sind. An der Außenseite der Ausbuchtung 86 sind Angriffsflächen 88, z.B. in Form eines Sechskants. angebracht. Zum Einstellen der Vorspannung der Spiralfeder 72 genügt es also. die Kopfschrauben 83 zu lösen und die Abstützkappe 78 so weit nach unten abzuziehen, bis die Stifte 80 aus den Bohrungen 84 herausgetreten sind. Dann kann man durch Ansetzen eines Schlüssels an den Angriffsflächen 88 die Abstützkappe 78 verdrehen und damit die Vorspannung der Feder 72 einstellen. Ist die richtige Vorspannung erreicht, so wird die Abstützkappe 78 wieder an die Lagerwange 26b zur Anlage gebracht, wobei die jeweiligen Bohrungen 84 dann auf die jeweiligen Stifte 80 aufgleiten.

Bei der Erstmontage kann man die Spiralfeder 72 in die Abstützkappe 78 einlegen und mit ihrem äußeren Ende 72b in den Schlitz 76 der Abstützkappe 78 einhaken. Dann wird die Abstützkappe 78 mit der Spiralfeder 72 über das untere Ende der Querwelle 28 aufgeschoben und der Eingriff des inneren Endes 72a mit der Hakennut 74 gesucht. Anschließend wird wieder die Vorspannung durch Drehen der Abstützkappe 78 eingestellt und schließlich wird die Abstützkappe 78 an die Lagerwange 26b herangeschoben, wobei wieder eine der Bohrungen 84 auf den Stift 80 aufgleitet, um die einmal eingestellte Vorspannung zu sichern. Dann kann die Befestigung der Abstützkappe 78 durch die Kopfschrauben 83 bewirkt werden.

Die Spiralfeder 72 ist so ausgelegt, daß das von ihr um die Querachse 30 erzeugte, an der Abstützkappe 78 und damit an dem Kupplungskörper 10 angreifende Moment. das Eigengewichtsmoment des Kupplungskörpers 10 um die Querachse 30 annähernd kompensiert. Dank der Weichheit der nicht vorgespannten Spiralfeder 72 einerseits und dank der Vorspannung der Spiralfeder 72 andererseits verändert sich das von der Spiralfeder ausgeübte Rückstellmoment in dem Arbeitsschwenkwinkelbereich des Kupplungskörpers 10, von beispielsweise 30° nach unten und 20° nach oben, jeweils gegenüber der Horizontalen,nur geringfügig. In diesem Bereich verändert sich auch das Eigengewichtsmoment des Kupplungskörpers 10 nur geringfügig. Dies bedeutet, daß das Eigengewichtsmoment des Kupplungskörpers 10 in dem Arbeitsschwenkwinkelbereich ständig annähernd durch die Spiralfeder 72 kompensiert ist. Insoweit, als die Kompensation nicht vollständig ist, greift man auf die Reibung zurück, welche durch die Verrastungskugeln 62 und die Verrastungsscheibe 54 einerseits und durch den Abstützflansch 40 und die Zwischenscheibe 42 andererseits bedingt ist. Das Reibungsmoment und das Rückstellmoment der Spiralfeder 72 sind aufeinander abgestimmt. Wenn das Zugfahrzeug auf die Anhängerdeichsel 18 eine Zugkraft ausübt, wie dies im normalen Fahrbetrieb der Fall ist. so liegen die virtuelle Querachse 20 und die Querachse 30 annähernd in Flucht in Richtung der Zugkraft. Die zylindrische Bohrung 16a der Zugdeichselöse 16 liegt mit Linienberührung an dem zylindrischen Abschnitt 14a des Kupplungsbolzens 14 an. Diese Linienberührung ist durch das Rückstellmoment der Spiralfeder 72 und durch das Reibmoment sichergestellt. Wenn,etwa beim Abbremsen.der Anhänger auf das Zugfahrzeug auffährt. so bleibt die Winkeleinstellung des Kupplungskörpers 10 dank der Kompensation des Eigengewichtsmoments durch die Spiralfeder 72 und das Reibmoment erhalten. Dies bedeutet, daß auch dann die virtuelle Schwenkachse 20 und die Schwenkachse 30 auf der Kraftübertragungslinie (nunmehr Druckkraftübertragungslinie) im wesentlichen verharren. Es tritt keine Kniehebelwirkung ein. d.h. keine Tendenz zur zunehmenden Schrägstellung der Zugöse 16 gegenüber dem Kupplungsbolzen 14. Dadurch wird der Kupplungsbolzen 14 von abnutzungsgefährdenden Punktbelastungen freigehalten.

Bei den vorstehenden Überlegungen wurde davon ausgegangen, daß die Zugdeichsel 18, wie häufig der Fall. ihrerseits annähernd ausbalanciert ist. Ist die Zugdeichsel nicht, oder nicht vollständig ausbalanciert, so ist. es denkbar, die Spiralfeder 72 so vorzuspannen, daß sie auch das Eigengewichtsmoment. welches die Zugdeichsel an den Kupplungskörper 10 erzeugt, zu kompensieren. Selbst wenn diese Kompensation aber nicht durchgeführt wird, bringt die Kompensation des Eigengewichtsmoments des Kupplungskörpers 10 den erheblichen Vorteil, daß wenigstens vom Eigengewicht des Kupplungskörpers 10 her keine schädliche Kniehebelwirkung zu erwarten ist.

Wenn der Kupplungskörper 10 abgeschwenkt werden soll, um ihn etwa aus dem Arbeitsbereich eines Heckkippers herauszubewegen, so erfolgt das Abschwenken gegen das Reibmoment und gegen das Rückstellmoment der Spiralfeder 72 unter Überwindung der verschiedenen Verrastungspositionen, die sich jeweils nach 30° und 60° einstellen. Der Bedienungsmann kann den Kupplungskörper mit Schwung abschwenken, so daß es ihm ein leichtes ist, die Verrastungspositionen zu überfahren. Mit zunehmender Annäherung an die 90° Abklappstellung nimmt das Rückstellmoment der Spiralfeder 72 zu und das Eigengewichtsmoment des Kupplungskörpers 10 nimmt ab. Dies führt aber nicht zu einer Erschwerung der Handhabung und zwar deshalb nicht, weil der Bedienungsmann beim Abschwenken des Kupplungskörpers eine günstige Arbeitsstellung gegenüber dem Kupplungskörper einnehmen kann, indem er sich mit seinem eigenen Gewicht auf den Kupplungskörper stützt und sich bei Annäherung des Kupplungskörpers mit seinen Beinen nach rückwärts gegen den Boden spreizt. Beim Wiederanheben des Kupplungskörpers aus der 90° Abklappstellung steht dann das vergrößerte Rückstellmoment der Spiralfeder 72 zur Verfügung. Der Bedienungsmann braucht in dieser ergonomisch ungünstigen Arbeitsphase kein wesentliches, oder jedenfalls nur ein verringertes Rückstellmoment auf den Kupplungskörper 10 ausüben.

Das Rastlösemoment in der 90° Abklappstellung kann man so bemessen, daß es in Verbindung mit dem Reibmoment dem vergrößerten Rückstellmoment standhält und der Kupplungskörper deshalb in der 90° Abklappstellung verharrt, solange er dort im Hinblick auf die Bewegung eines Heckkippers oder sonstigen Aufbaus des Zugfahrzeugs verharren soll.

## Ansprüche

1. Anhängerkupplung, insbesondere Schwerlastanhängerkupplung, umfassend einen Kupplungskörper (10) mit einem die Zugöse (16) eines nachlaufenden Fahrzeugs (Anhänger) spielarm durchsetzenden, im wesentlichen zylindrischen Kupplungsbolzen (14), wobei der Kupplungskörper (10) an einem, gegebenenfalls um eine horizontale Längsachse (38) drehbaren Zugelement (34) um eine im wesentlichen horizontale Querachse (30) schwenkbar gelagert ist, wobei weiter durch ein vorgegebenes Rastlösemoment auf den Kupplungskörper (10) um die Querachse (30) überwindbare Verrastungsmittel (58, 62, 54, 52, 50, 48) vorgesehen sind, welche den Kupplungskörper (10) in horizontaler Lage (Auslenkung Null um die Querachse) zu verrasten gestatten, und wobei weiter die Schwenkbewegung des Kupplungskörpers (10) um die Querachse (30) durch Reibungsmittel (62, 54, 40, 42) dämpfbar ist, **dadurch gekennzeichnet,** daß an dem Kupplungskörper (10) eine Gewichtskompensationsfeder (72) angreift, welche ein Moment um die Querachse (30) erzeugt und dem Eigengewichtsmoment des Kupplungskörpers (10) um die Querachse (30) wenigstens in einem an die horizontale Lage des Kupplungskörpers (10) angrenzenden Arbeitsschwenkwinkelbereich um die Querachse (30) annähernd das Gleichgewicht hält.

2. Anhängerkupplung nach Anspruch 1, dadurch gekennzeichnet, daß der Kupplungskörper (10) um annähernd 90° um die Querachse (30) nach unten abklappbar ist und daß die Gewichtskompensationsfeder (72) auf dem gesamten Abklappweg bis 90° ein dem Eigengewichtsmoment des Kupplungskörpers (10) entgegenwirkendes Rückstellmoment erzeugt.

3. Anhängerkupplung nach Anspruch 2, dadurch gekennzeichnet, daß das von der Eigengewichtskompensationsfeder (72) ausgeübte Rückstellmoment auf den Kupplungskörper (10) mit zunehmender Annäherung an die 90° Abklappstellung zunimmt.

4. Anhängerkupplung nach einem der Ansprüche 2 und 3, dadurch gekennzeichnet, daß der Kupplungskörper (10) auch in der um ca. 90° abgeklappten Stellung durch mittels eines vorgegebenen Rastlösemoments auf den Kupplungskörper (10) überwindbare Verrastungsmittel (58, 62, 54, 52, 50, 48) verrastbar ist.

5. Anhängerkupplung nach einem der Ansprüche 1 bis 4, dadurch gekennzeichnet, daß die Eigengewichtskompensationsfeder (72) von einer Spiralfeder (72) gebildet ist, welche die Querachse (30) umgibt.

6. Anhängerkupplung nach einem der Ansprüche 1 bis 5, dadurch gekennzeichnet, daß die Eigengewichtskompensationsfeder (72) unter einer auch in der Horizontalstellung des Kupplungskörpers (10) noch bestehenden Vorspannung auf den Kupplungskörper (10) wirkt.

7. Anhängerkupplung nach Anspruch 6, dadurch gekennzeichnet, daß die Vorspannung einstellbar ist.

8. Anhängerkupplung nach einem der Ansprüche 5 bis 7, dadurch gekennzeichnet, daß die Spiralfeder (72) mit ihrem inneren Ende (72a) an einer Querwelle (28) angreift, welche in einem Auge (32) des Zugelements (34) unverdrehbar gelagert ist. und mit ihrem äußeren Ende (72b) an einer die Spiralfeder (72) umschließende Abstützkappe (78), wobei diese Abstützkappe (78) an einer dem Auge (32) anliegenden Lagerwange (26b) des Kupplungskörpers (10). gegebenenfalls in verschiedenen Winkelstellungen.feststellbar und sicherbar ist.

9. Anhängerkupplung nach Anspruch 8. dadurch gekennzeichnet, daß die Abstützkappe (78) auf einem Ende der Querwelle (28) drehbar und axial verschiebbar gelagert ist. daß die Abstützkappe (78) durch Axialverschiebung gegenüber der Querwelle (28) aus ihrer jeweiligen Feststellung gegenüber der Lagerwange (26b) lösbar ist. und zwar so. daß nach Lösung der jeweiligen Feststellung die Abstützkappe (78) noch auf dem Ende der Querwelle (28) drehbar gelagert ist. und daß an der Abstützkappe (78) Angriffsflächen (88), zum Aufbringen eines Federvorspannmoments angebracht sind.

10. Anhängerkupplung nach Anspruch 9. dadurch gekennzeichnet, daß die Abstützkappe (78) an ihrer Endwand eine Ausbuchtung (86) besitzt. deren Innenumfangsfläche die Lagerung der Abstützkappe (78) auf der Querwelle (28) übernimmt und deren Außenumfangsfläche die Angriffsflächen (88) aufweist.

11. Anhängerkupplung nach einem der Ansprüche 1 bis 10. dadurch gekennzeichnet, daß die Verrastungsmittel (58, 62, 54, 52, 50, 48) als Kugelverrastungsmittel ausgebildet sind. welche sowohl in der horizontalen Stellung des Kupplungskörpers (10) als auch in der abgeklappten Stellung des Kupplungskörpers eine Verrastung bewirken (und gegebenenfalls dazwischen).

12. Anhängerkupplung nach Anspruch 11. dadurch gekennzeichnet, daß die Kugelverrastungsmittel von zwei gegeneinander um die Querachse (30) verdrehbaren Verrastungsscheiben (54. 58) gebildet sind, deren erste (54) unverdrehbar mit der Querwelle (28) verbunden ist und deren zweite (58) unverdrehbar mit einer Lagerwange (26a) des Kupplungskörpers (10) verbunden ist. wobei eine (58) der Verrastungsscheiben mindestens eine Verrastungskugel (62) zum Eingriff in Verrastungsausnehmungen (66) der jeweils anderen (54) aufnimmt.

13. Anhängerkupplung nach Anspruch 12. dadurch gekennzeichnet, daß die mit der Lagerwange (26a) verbundene Verrastungsscheibe (58) an der Lagerwange (26a) anliegt. daß die mit der Querwelle (28) verbundene Verrastungsscheibe (54) unverdrehbar aber axial verschiebbar auf der Querwelle (28) geführt ist. daß auf einem Gewindeabschnitt der Querwelle eine Einstellmutter (48) verstellbar angeordnet ist und daß zwischen der Einstellmutter (48) und der axial verschiebbaren Verrastungsscheibe (54) eine axiale Kompressionsfeder (52), insbesondere in Form eines Tellerfederpakets (52), angeordnet ist.

14. Anhängerkupplung nach einem der Ansprüche 1 bis 13, dadurch gekennzeichnet, daß die Reibungsmittel. wenigstens zum Teil, von den Verrastungsmitteln (62, 54) gebildet sind. wenn sich diese jeweils außerhalb einer bestimmten Verrastungsstellung befinden.

15. Anhängerkupplung nach Anspruch 14. dadurch gekennzeichnet, daß die Einstellung des Rastlösemoments gleichzeitig eine Einstellung des Reibmoments bewirkt. wobei die relative Einstellung von Reibmoment und Rastlösemoment insoweit durch die Geometrie der Verrastungsmittel (58, 62, 54, 52, 50, 48) beeinflußbar ist.

16. Anhängerkupplung nach einem der Ansprüche 1 bis 15, dadurch gekennzeichnet, daß die Verrastungsmittel (58, 62, 54, 52, 50, 48) durch eine Abdeckkappe (70) abgedeckt sind.

17. Anhängerkupplung nach einem der Ansprüche 1 bis 16, dadurch gekennzeichnet. daß bei Lagerung des Kupplungskörpers (10) auf einer ein Lagerauge (32) des Zugelements (34) unverdrehbar durchsetzenden Querwelle (28) vermittels zweier beidseits des Lagerauges (32) liegender Lagerwangen (26a,26b) die Eigengewichtskompensationsfederung (72) an der vom Lagerauge (32) fernen Seite der einen Lagerwange (26b) und die Verrastungsmittel (58, 62, 54, 52, 50, 48) auf der vom Lagerauge (32) ferngelegenen Seite der anderen Lagerwange (26a) angeordnet sind.

18. Anhängerkupplung nach Anspruch 17. dadurch gekennzeichnet, daß die Querwelle (28) in dem Lagerauge (32) des Zugelements (34) axial lose gelagert ist. daß an der Querwelle (28) auf der Seite der Eigengewichtskompensationsfederung (72) ein Abstützflansch (40) angeordnet ist, welcher gegen die zugehörige Lagerwange (26b) des Kupplungskörpers (10) oder eine an dem Kupplungskörper (10) anliegenden Zwischenscheibe (42) anliegt, und daß dieser Abstützflansch (40) durch eine Verrastungsfederung (52) reibend gegen die zugehörige Lagerwange (26b) bzw. die Zwischenscheibe (42) angedrückt ist.

Fig.1

# Fig.2

EP 0 298 265 A2

# Fig.3